# EUROPEAN PATENT APPLICATION

(11) **EP 4 775 928 A1**
(43) Date of publication of application: **15.07.2026**
(21) Application number: 25223414.1
(22) Date of filing: 15.12.2025
(51) Int. Cl.: G01C 19/72

(54) **RESONANT OPTICAL GYROSCOPE WITH INTEGRATED OPTICAL COMPONENTS AND A BROADBAND OPTICAL SOURCE**

(30) Priority: 08.01.2025 US 202519013895
(71) Applicant: Honeywell International Inc., Charlotte, NC 28202 (US)
(72) Inventor: WU, Jianfeng, Charlotte, 28202 (US); JIANG, Wei Charles, Charlotte, 28202 (US); TIN, Steven, Charlotte, 28202 (US)
(74) Representative: Haseltine Lake Kempner LLP

(57) **Abstract**

Techniques are provided for reducing size, weight, power consumption, and cost of a resonant optical gyroscope in comparison to a resonant fiber optic gyroscope. At least some components of the resonant optical gyroscope are integrated in a photonic integrated circuit (PIC). The PIC includes a broadband optical signal source optical circuit configured to generate an amplified spontaneous emission, an optical divider/combiner, a first optical coupler or circulator optically coupled between the broadband optical signal source optical circuit and the broadband optical signal source optical circuit, a first optical phase modulator optically coupled to the optical divider/combiner, a second optical phase modulator optically coupled to the optical divider/combiner; and an optical resonator including a rotation axis and optically coupled to the first and the second optical phase modulators.

## Description

### BACKGROUND

A conventional resonant fiber optic gyroscope (RFOG) is implemented with discrete components such as narrow linewidth laser(s), a resonator including a coil of optical fiber and an optical interface coupling optical signals into and out of the coil, optical detectors, and feedback electronics. The optical signal generated by a narrow linewidth laser has a linewidth of about one Hertz. The optical signals generated by the narrow linewidth laser(s) are locked to resonances of a resonator. The conventional RFOG is complex and costly. Further, the conventional RFOG is subject to bias error due to the Kerr effect.

### SUMMARY

In some aspects, the techniques described herein relate to an apparatus configured to be used for determining a rotation rate, the apparatus including: a photonic integrated circuit (PIC) including a substrate, wherein the PIC includes: a broadband optical signal source optical circuit configured to generate an amplified spontaneous emission; an optical divider/combiner; a first optical coupler or circulator optically coupled between the broadband optical signal source optical circuit and the optical divider/combiner; wherein the first optical coupler or is configured to receive the amplified spontaneous emission and to emit the amplified spontaneous emission to the optical divider/combiner; wherein the optical divider/combiner is configured to emit a first portion and a second portion of the amplified spontaneous emission; a first optical phase modulator optically coupled to the optical divider/combiner, and configured to phase modulate the first portion of the amplified spontaneous emission with an in-phase periodic signal; a second optical phase modulator optically coupled to the optical divider/combiner and configured to phase modulate the second portion of the amplified spontaneous emission with a phase inverted periodic signal; and an optical resonator including a rotation axis and optically coupled to the first and the second optical phase modulators; wherein the optical resonator is configured to (a) receive a first phase modulated portion of the amplified spontaneous emission from the first optical phase modulator, (b) receive a second phase modulated portion of the amplified spontaneous emission from the second optical phase modulator, (c) emit a first resonant optical signal, and (d) emit a second resonant optical signal; wherein the optical divider/combiner is further configured to combine the first and the second resonant optical signals.

In some aspects, the techniques described herein relate to a method of generating at least one signal configured to be used to determine a rate of rotation, the method including: generating, in a photonic integrated circuit (PIC), an amplified spontaneous emission; dividing, in the PIC, the amplified spontaneous emission into a first portion and a second portion; phase modulating, in the PIC, the first portion with an in-phase periodic signal; phase modulating, in the PIC, the second portion with a phase inverted periodic signal; receiving, in the PIC, a first phase modulated portion, of the amplified spontaneous emission, at a first port of an optical resonator; receiving, in the PIC, a second phase modulated portion, of the amplified spontaneous emission, at a second port of the optical resonator; emitting, in the PIC, a first resonant optical signal from the second port of the optical resonator, wherein the first resonant optical signal circulates around the optical resonator in a first direction; emitting, in the PIC, a second resonant optical signal from the first port of the optical resonator, wherein the second resonant optical signal circulates around the optical resonator in a second direction which is opposite to the first direction; combining in the PIC, the first and the second resonant optical signals.

In some aspects, the techniques described herein relate to a resonant optical gyroscope, including: a photonic integrated circuit (PIC) including a substrate, wherein the PIC includes: a broadband optical signal source optical circuit configured to generate an amplified spontaneous emission; an optical divider/combiner; a first optical coupler or circulator optically coupled between the broadband optical signal source optical circuit and the optical divider/combiner; wherein the first optical coupler or is configured to receive the amplified spontaneous emission and to emit the amplified spontaneous emission to the optical divider/combiner; wherein the optical divider/combiner is configured to emit a first portion and a second portion of the amplified spontaneous emission; a first optical phase modulator optically coupled to the optical divider/combiner, and configured to phase modulate the first portion of the amplified spontaneous emission with an in-phase periodic signal; a second optical phase modulator optically coupled to the optical divider/combiner and configured to phase modulate the second portion of the amplified spontaneous emission with a phase inverted periodic signal; and an optical resonator including a rotation axis and optically coupled to the first and the second optical phase modulators; wherein the optical resonator is configured to (a) receive a first phase modulated portion of the amplified spontaneous emission from the first optical phase modulator, (b) receive a second phase modulated portion of the amplified spontaneous emission from the second optical phase modulator, (c) emit a first resonant optical signal, and (d) emit a second resonant optical signal; wherein the optical divider/combiner is further configured to combine the first and the second resonant optical signals; an optical detector optically coupled to the first optical coupler and configured to receive a combined first and second resonant optical signals; a periodic signal generator configured to generate the in-phase periodic signal, the phase inverted periodic signal, and a reference periodic signal; a demodulating circuit electrically coupled to the optical detector and configured to (a) receive the reference periodic signal or the phase inverted periodic signal and (b) emit a demodulated electrical signal; and circuitry configured to, using the demodulated electrical signal, determine a rate of rotation of the optical resonator around rotation axis; wherein the broadband optical signal source optical circuit configured to generate the amplified spontaneous emission includes: a laser configured to emit a pump optical signal; a planar optical waveguide configured to receive the pump optical signal and generate the amplified spontaneous emission; and a wavelength division multiplexor configured to optically couple the pump optical signal to the planar optical waveguide configured to generate the amplified spontaneous emission, to receive the amplified spontaneous emission from the planar optical waveguide configured to generate the amplified spontaneous emission, and to optically couple the amplified spontaneous emission to the first optical coupler or circulator; wherein the wavelength division multiplexor is further configured to suppress the amplified spontaneous emission coupled to the laser and to suppress the pump optical signal coupled to the first optical coupler or circulator; wherein the pump optical signal has a narrower line width than a bandwidth of the amplified spontaneous emission.

### BRIEF DESCRIPTION OF THE DRAWINGS

Understanding that the drawings depict only exemplary embodiments and are not therefore to be considered limiting in scope, the exemplary embodiments will be described with additional specificity and detail through the use of the accompanying drawings, in which:
FIG. 1A illustrates a block diagram of one embodiment of an open loop resonant optical gyroscope including a broadband optical signal source;
FIG. 1B illustrates a block diagram of one embodiment of a closed loop resonant optical gyroscope including a broadband optical signal source;
FIG. 2A illustrates a cross sectional diagram of one embodiment of a planar optical waveguide which may be used to implement components of the open loop open and the closed loop resonant optical gyroscope including a broadband optical signal source;
FIG. 2B illustrates a cross sectional diagram of one embodiment of a planar optical waveguide configured to generate an amplified spontaneous emission;
FIG. 2C illustrates a cross sectional diagram of one embodiment of an optical phase modulator;
FIG. 3 illustrates a flow diagram of one embodiment of a method of generating optical signals which may be used to determine a rate of rotation in an ROG; and
FIG. 4 illustrates one embodiment of determining the rate of rotation of the optical resonator around the rotation axis of the optical resonator.

In accordance with common practice, the various described features are not drawn to scale but are drawn to emphasize specific features relevant to the exemplary embodiments. Reference characters denote like elements throughout figures and text.

### DETAILED DESCRIPTION

In the following detailed description, reference is made to the accompanying drawings that form a part hereof, and in which is shown by way of illustration specific illustrative embodiments. However, it is to be understood that other embodiments may be utilized, and that structural, mechanical, and/or electrical changes may be made. Furthermore, each method presented in the drawing figures and the specification is not to be construed as limiting the order in which the individual steps may be performed. The following detailed description is not to be taken in a limiting sense.

Embodiments of the invention provide a technological improvement to resonant optical gyroscopes by reducing size, weight, and power, and cost (SWaP-C) by integrating at least optical components (*e.g.,* a broadband optical signal source, an optical resonator, an optical detector, and other optical components) in a photonic integrated circuit (PIC). The broadband optical signal source may optionally utilize a rare Earth doped optical waveguide to generate, using amplified spontaneous emission, a broadband optical signal pumped by a higher power narrow spectral width laser. A broadband optical signal generated by the broadband optical signal source may have a spectral width from 1nm to 100nm.

Because they utilize a broadband optical signal, embodiments of the invention provide a technological improvement to resonant optical gyroscopes by diminishing bias error arising due to the Kerr effect. Embodiments of the invention can operate over a larger temperature range without bias drift in comparison to a conventional RFOG.

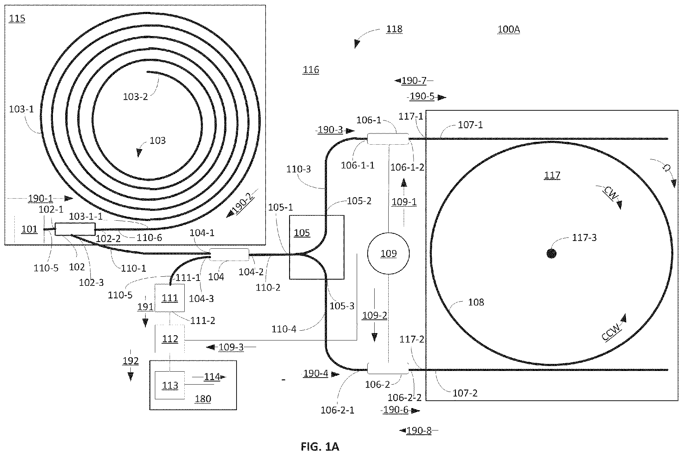

FIG. 1A illustrates a block diagram of one embodiment of an open loop resonant optical gyroscope including a broadband optical signal source (open loop ROG-BOSS) 100A. The open loop ROG-BOSS 100A includes the following components in, e.g., integrated in, the PIC 118: the broadband optical signal source (or broadband optical signal source optical circuit) 115, a first optical coupler or circulator 104, an optical divider/combiner 105, a first optical phase modulator 106-1, a second optical phase modulator 106-2, and an optical resonator 117. Optionally, the optical divider/combiner 105 is an optical Y-coupler. The open loop ROG-BOSS 100A also includes an optical detector 111, a demodulator circuit 112, and a circuit 180 configured to determine a rate of rotation of the optical resonator; optionally, one or more of such components may be in the PIC 118. The circuit 180 configured to determine the rate of rotation optionally includes a processing system (or processing circuitry) 113. Optionally, the processing system 113 includes processor circuitry communicatively coupled to memory circuitry.

The first optical coupler or circulator 104 includes a first port 104-1, a second port 104-2, and a third port 104-3. The optical divider/combiner 105 includes a first port 105-1, a second port 105-2, and a third port 105-3. The first optical phase modulator 106-1 includes a first port 106-1-1 and a second port 106-1-2. The second optical phase modulator 106-2 includes a first port 106-2-1 and a second port 106-2-2.

The open loop ROG-BOSS 100A optionally includes optical waveguide coupling the aforementioned optical components, *e.g.:* a first optical waveguide 110-1 optically coupling the broadband optical signal source 115 and the first port 104-1 of the first optical coupler or circulator 104, a second optical waveguide 110-2 optically coupling the second port 104-2 of the first optical coupler or circulator 104 and the first port 105-1 of the optical divider/combiner 105, a third optical waveguide 110-3 optically coupling the second port of the optical divider/combiner 105 and the first port 106-1-1 of the first optical phase modulator 106-1, and/or a fourth optical waveguide 110-4 optically coupling the second port of the optical divider/combiner 105 and the first port 106-2-1 of the second optical phase modulator 106-2. Each optical waveguide is formed over a substrate of the PIC 118.

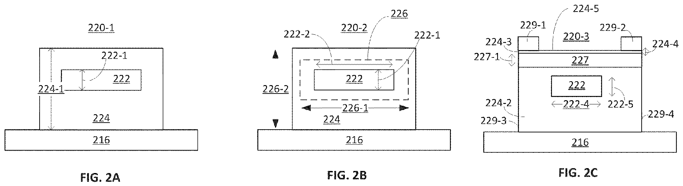

The optical resonator 117 includes a first port 117-1 optically coupled to the second port of 106-1-2 of the first optical phase modulator 106-1, and a second port 117-2 optically coupled to the second port 106-2-2 of the second optical phase modulator 106-2. The open loop ROG-BOSS 100A, *e.g.,* the optical resonator 117, has a rotation axis 117-3; the open loop ROG-BOSS 100A is configured to measure a rate of rotation Ω around the rotation axis 117-3. Optionally, the optical resonator 117 includes a first optical waveguide 107-1 optically connected to the first port 117-1 of the optical resonator 117, a second optical waveguide 107-2 optically connected to the second port 117-2 of the optical resonator 117, and a planar optical resonator 108. Optionally, the planar optical resonator 108 is a disc, an oval, a ring, a race track, a microsphere, or any other type of planar optical resonator. Optionally, the planar optical resonator includes the core 222 surrounded by the cladding 224 illustrated in FIG. 2A.

The broadband optical signal source 115, the first optical coupler or circulator 104, the optical divider/combiner 105, the first optical phase modulator 106-1, the second optical phase modulator 106-2, the optical resonator 117, and the optional optical waveguides formed in the PIC 118 with corresponding planar optical structures. Thus, for example, each of the optional optical waveguides used in the PIC, the first optical coupler or circulator 104, the optical divider/combiner 105, the first and the second optical phase modulators 106-1, 106-2, and the optical resonator 117 are each formed with planar optical waveguide. Some of such planar structures are described elsewhere herein. Other planar structures are implemented using conventional techniques.

The PIC 118 and the optical components formed therein, are formed over a substrate 116. Optionally, the substrate 116 is a silicon on an insulator.

FIG. 2A illustrates a cross-sectional diagram of one embodiment of a planar optical waveguide 220-1 which may be used to implement components of the open loop ROG-BOSS 100A and the closed loop ROG-BOSS 100B. Optionally, such components included one or more optical waveguide(s), one or more optical coupler, an optical divider/combiner, and/or an optical resonator. The planar optical waveguide 220-1 includes a core 222 surrounded or covered by cladding 224. The core 222 has a higher index of refraction than the cladding 224. Optionally, the core is formed from silicon nitride and the cladding is formed from silicon dioxide. The cladding 224, and thus the core 222, are over the substrate 216.

The core 222 has a thickness 222-1. The cladding 224 has a cladding thickness 224-1. Optionally, the core thickness 222-1, *e.g.,* 10-160nm or 30 nm, is substantially thinner than the cladding thickness 224-1, *e.g.,* 10-50 microns or 20 microns, to diminish dissipative loss in the planar optical waveguide 220-1. Optionally, a ratio of the cladding thickness 224-1 to a core thickness 222-1 is greater than 50, *e.g.,* between 50 to 1000. Because the core thickness is substantially thinner than the cladding thickness, an electromagnetic field of an optical signal propagating in the planar optical waveguide 220-1 is not confined by the core 222 but rather by the cladding 224. Thus, most, *e.g.,* ninety percent, of the electromagnetic field of the optical signal resides in the cladding 224.

Returning to FIG. 1A, optionally, the broadband optical signal source 115 includes a pump laser 101, a wavelength division multiplexor 102, and a planar optical waveguide configured to generate an amplified spontaneous emission 103. Optionally, a fifth optical waveguide 110-5 optically couples the pump laser 101 and a first port 102-1 of the wavelength division multiplexor 102. Optionally, a sixth optical waveguide 110-6 optically couples the second port 102-2 of the wavelength division multiplexor 102 to a port 103-1-1 of the planar optical waveguide configured to generate an amplified spontaneous emission 103-1.

Optionally, the pump laser 101 is a semiconductor laser. The pump laser 101 is optically coupled to a first port 102-1 of the wavelength division multiplexor 102 and configured to emit a pump optical signal 190-1, *e.g.,* of 975nm-980nm. Optionally, the wavelength division multiplexer 102 may be implemented as a wavelength dependent optical coupler or a wavelength dependent optical circulator. Due to frequency discrimination, the first port 102-1 is configured to transmit the pump optical signal 190-1 to the second port 102-2 and to suppress, e.g., not emit, the amplified spontaneous emission 190-2 at the first port.

A second port 102-2 of the wavelength division multiplexor 102 is optically couped to a port 103-1-1 of a planar optical waveguide configured to generate an amplified spontaneous emission 103-1. The second port 102-2 is configured to emit the pump optical signal 190-1 and receive the amplified spontaneous emission 103-1. The planar optical waveguide configured to generate an amplified spontaneous emission 103-1 is configured to receive the pump optical signal 190-1 through the port 103-1-1 from the second port 102-2 of the wavelength division multiplexor 102.

In response to receiving the pump optical signal 190-1, the planar optical waveguide configured to emit, in a direction opposite to a direction in which the pump optical signal 190-1 propagates, an amplified spontaneous emission 190-2. The amplified spontaneous emission 190-2 has at a lower center frequency, *e.g.,* 1535nm-1550nm, and a broader spectral width, in comparison to the pump optical signal 190-1.

The planar optical waveguide configured to generate an amplified spontaneous emission 103 includes, *e.g.,* is doped with, a rare Earth element atoms or ions which thereof; optionally, the rare Earth element is Neodymium, Erbium, Thulium, Holmium, Ytterbium, or any other rare Earth element whose atom or ion which induces such spontaneous emission. FIG. 2B illustrates a cross sectional diagram of one embodiment of a planar optical waveguide configured to generate an amplified spontaneous emission 220-2. The cross section of the planar optical waveguide configured to generate an amplified spontaneous emission 103 is similar to the cross section the planar optical waveguide 220-1 of FIG. 2A, but also includes a rare Earth element atoms or ions 226. Optionally, at least part of the cladding 224 surrounding, or covering the core 222, includes rare Earth element atoms or ions. Optionally, the rare Earth element atoms or ions are added to the cladding 224 by doping the cladding 224, *e.g.,* using ion implantation. Optionally, a width 226-1, of the cladding including the a rare Earth element atoms or ions 226 surrounding, at least partially, the core 222, is about twice the core width 222-2. Optionally, a thickness, or height, 226-2, of the cladding including the a rare Earth element atoms or ions 226 surrounding, at least partially, the core 222, is between 50 and 1000 times the thickness, or height 222-1, of the core. Optionally, the core width and core height are those specified with respect to FIG. 2A. Optionally, the core and cladding are formed from materials specified with respect to FIG. 2A. Optionally, the width 226-1, of the cladding including the a rare Earth element atoms or ions 226 surrounding, at least partially, the core 222 is between 5 and 50 microns. Optionally, the height 226-2, of the cladding including the a rare Earth element atoms or ions 226 surrounding, at least partially, the core 222, is between 5 and 20 microns. Optionally, the absolute and/or relative dimensions of the cladding 224 and the core 222 are the same as those described with respect to FIG. 2A.

Optionally, the planar optical waveguide configured to generate an amplified spontaneous emission 103-1 is terminated with a planar optical waveguide which is not configured to generate an amplified spontaneous emission 103-2. The planar optical waveguide which is not configured to generate an amplified spontaneous emission 103-2 may be implemented by the planar optical waveguide 220-1 illustrated in FIG. 2A.

Optionally, to diminish the area of the PIC 118 consumed by the planar optical waveguide configured to generate an amplified spontaneous emission 103-1 (and optionally the optional planar optical waveguide which is not configured to generate an amplified spontaneous emission 103-2), the planar optical waveguide configured to generate an amplified spontaneous emission 103-1 (and optionally the optional planar optical waveguide which is not configured to generate an amplified spontaneous emission 103-2) are wound in a spiral, *e.g.,* a circular, rectangular, polygonal or other type of spirals.

The amplified spontaneous emission 190-2 is coupled from the port 103-1-1 of the planar optical waveguide configured to generate an amplified spontaneous emission 103-1 to the second port 102-2 of the wavelength division multiplexor 102, and emitted from the third, or coupling, port 102-3 of the wavelength division multiplexor 102. Due to frequency discrimination, the third port 102-3 is configured to suppress, e.g., not emit, the pump optical signal 190-1 and to emit the amplified spontaneous emission 190-2.

The amplified spontaneous emission 190-2 is conveyed from the first port 104-1 of the first optical coupler or circulator 104 to the second port 104-2 of the optical coupler or circulator 104. The amplified spontaneous emission 190-2 is further conveyed from the second port 104-2 of the optical coupler or circulator 104 to the first port 105-1 of the optical divider/combiner 105. A first portion 190-3 of the amplified spontaneous emission 190-2 is emitted from the second port 105-2 of the divider/combiner 105 and received by a first port 106-1-1 of the first optical phase modulator 106-1. A second portion 190-4 of the amplified spontaneous emission 190-2 is emitted from the third port 105-3 of the divider/combiner 105 and received by a first port 106-2-1 of the second optical phase modulator 106-2. Optionally, the power levels of the first portion 190-3 and the second portion 190-4 are substantially equal.

Each of the first and the second optical phase modulators 106-1, 106-2 is configured to modulate the phase of the received portion based upon a signal received by the optical phase modulator. Optionally, each of the first and the second optical phase modulators 106-1, 106-2 is implemented with a modified form of the planar optical waveguide illustrated in FIG. 2A. FIG. 2C illustrates a cross sectional diagram of one embodiment of an optical phase modulator 220-3. The illustrated optical phase modulator 220-3 includes a non-centrosymmetric single crystal material with an optical axis whose refractive index is controlled by an external electric field (or non-centro symmetric single crystal material) 227; such material includes lithium niobate, monopotassium phosphate, potassium dideuterium phosphate, beta-barium borate, and barium titanate. Optionally, the non-centrosymmetric single crystal material 227 is a layer on top of the first cladding portion 224-2, and below a second cladding portion 224-3. The second cladding portion 224-3 has a surface 224-5 on which a first electrically conductive contact 229-1 and a second electrically conductive contact 229-2 are deposited. The first electrically conductive contact 229-1 is deposited on a first side 229-3 of the cross section of the optical phase modulator 220-3. The second electrically conductive contact 229-2 is deposited on a second side 229-4 of the cross section of the optical phase modulator 220-3. One of the electrical signals emitted by a periodic signal generator 109 and optionally a feedback electrical signal from the circuit 180 configured to determine the rate of rotation, e.g., the feedback circuit 183, are applied across the first and the second electrically conductive contacts 229-1, 229-2 changing the external electrical field applied to the non-centrosymmetric single crystal material 227.

Optionally, a ratio of the non-centrosymmetric single crystal material thickness 227-1 to the core thickness 222-5 is between 0.5 and 2, *e.g.,* one. Optionally, a ratio of the second cladding portion thickness 224-4 to the non-centrosymmetric single crystal material thickness 227-1 is between one and fifteen. Optionally, a ratio of the core width 222-4 to the core thickness 222-5 is greater than or 2, *e.g.,* between 2 to 15. Optionally, the core width 222-4 is between 1 and 2 microns. Optionally, the core thickness 222-5 is between 150 nm and 300 nm. Optionally, the non-centrosymmetric single crystal material thickness 227-1 is between 150nm and 300nm. Optionally, the second cladding portion thickness 224-4 is between 0.4 and 2 microns. Optionally, the core and cladding are formed from materials specified with respect to FIG. 2A.

Each of the first and the second optical phase modulators 106-1, 106-2 are electrically coupled to a periodic signal generator 109. The periodic signal generator 109 is configured to generate a periodic signal, *e.g.,* a sine wave, a square wave, a triangle wave, or any other periodic waveform. The periodic signal generator 109 is configured to provide an in-phase periodic signal 109-1 and a phase inverted periodic signal 109-2, *i.e.,* one hundred and eighty degrees out of phase with the in-phase periodic signal. The in-phase periodic signal 109-1 is provided to the first or the second optical phase modulator 106-1, 106-2, *e.g.,* the non-centrosymmetric single crystal material 227 therein. The phase inverted periodic signal 109-2 is provided to the optical phase modulator, *e.g.,* the non-centrosymmetric single crystal material 227 therein, to which the in-phase periodic signal 109-1 is not provided. Each the in-phase and the phase inverted periodic signals 109-1, 109-2 is configured to modulate the phase of the portion 190-3, 190-4 propagating through the optical phase modulator which receives such periodic signal. For pedagogical purposes, in FIG. 1A, the in-phase periodic signal 109-1 is provided to the first optical phase modulator 106-1 and the phase inverted periodic signal 109-2 is provided to the second optical phase modulator 106-2.

The first optical phase modulator 106-1 provides, from its second port 106-1-2, a first phase modulated portion 190-5 of the amplified spontaneous emission 190-2 to a first port 117-1 of the optical resonator 117. The second optical phase modulator 106-2 provides, from its second port 106-2-2, a second phase modulated portion 190-6 of the amplified spontaneous emission 190-2 to a second port 117-2 of the optical resonator 117.

The optical resonator 117 has a series of clockwise (CW) resonant frequencies and a series of counterclockwise (CCW) resonant frequencies whose spectral widths each overlap with a frequency spectrum of the amplified spontaneous emission 190-2. The CW and the CCW resonant frequencies are identical when the optical resonator 117 is not rotated around the rotation axis 117-3. However, the CW and the CCW resonant frequencies become different when the optical resonator 117 is rotated around the rotation axis 117-3; this occurs because each of the CW and the CCW resonant frequencies have different frequency shifts.

A portion of a first phase modulated portion 190-5 of the amplified spontaneous emission 190-2 at the CW resonant frequencies (*i.e.,* a CW resonant optical signal 190-8) is emitted from the second port 117-2 of the optical resonator 117, and thus from the first port 106-1-2 of the second phase modulator 106-2. A portion of a second phase modulated portion 190-6 of the amplified spontaneous emission 190-2 at the CCW resonant frequencies (*i.e.,* a CCW resonant optical signal 190-7) is emitted from the first port 117-1 of the optical resonator 117, and thus from the first port 106-1-1 of the second phase modulator 106-2. Each resonant optical signal described herein has a spectral width narrower than the bandwidth of the amplified spontaneous emission or portions thereof, including phase modulated portions thereof.

The CW resonant optical signal 190-8 is received by the second port 105-2 of the optical combiner/divider 105. The CCW resonant optical signal 190-7 is received by the third port of the optical divider/combiner 105. Each of the CW and CCW resonant optical signals 190-7, 190-8 are combined in the optical divider/combiner 105, and emitted by the first port of the optical divider/combiner 105 to the second port 104-2 of the first optical coupler or circulator 104.

The combined CW and CCW resonant optical signals 190-7, 190-8 are emitted from a third, or coupling, port 104-3 of the optical coupler or circulator 104 to an optical detector 111. The optical detector 111 includes an optical port 111-1 coupled to the third port 104-3 and an electrical port 111-2. Optionally, the optical detector 111 is a photodiode and optionally further includes a transimpedance amplifier. Optionally, the PIC 118 includes the optical detector 111. The optical detector 111 is configured to convert the combined CW and CCW resonant optical signals 190-7, 190-8 (incident upon the optical detector 111) to an electrical signal 191 having an electrical parameter (*e.g.,* a current or voltage) proportional to an optical power of the combined CW and CCW resonant optical signals 190-7, 190-8.

The electrical signal 191 is emitted from electrical port 111-2 of the optical detector 111 and received by a demodulator circuit 112, for example, a frequency demodulator circuit, *e.g.,* a lock-in amplifier. The demodulator circuit 112 is also configured to receive a reference periodic signal 109-3 from the periodic signal generator 109. The reference periodic signal 109-3 may have an arbitrary phase offset, *e.g.,* a zero or non-zero phase shift, from the in-phase periodic signal 109-1. The demodulator circuit 112 is configured to demodulate the electrical signal 191 at a frequency of the reference periodic signal 109-3. Demodulation and phase modulation as illustrated in and described with respect to FIG. 1A permits easier detection of data, *e.g.,* electrical parameter(s), of the electrical signal 191 in the presence of noise. The demodulator circuit 112 is further configured to emit a demodulated electrical signal 192 to a processing system (*e.g.,* processing circuitry) 113. Optionally, the demodulator circuit 112 includes, at an output of the demodulator circuit 112, an analog to digital converter configured to convert the demodulated electrical signal 192 from an analog format to a digital format.

The processing system 113 is configured to use the demodulated electrical signal 192 to determine a rotation rate Ω of the open loop ROG-BOSS 100A, *e.g.,* the optical resonator 117 therein. When the gyroscope is stationary, there is no phase difference between the CW and CCW resonant optical signals 190-7, 190-8. Thus, when there is no such phase difference, the interference between the CW and CCW resonant optical signals 190-7, 190-8 in the optical detector reaches a maximum value due to constructive interference. To improve sensitivity of detection of small changes in rate of rotation around the rotation axis 117-3, the first portion 190-3 and the second portion 190-4 are modulated with periodic signals which are one hundred and eighty degrees out of phase so that the CW and CCW resonant optical signals 190-7, 190-8 destructively interfere and yield a zero beat output from the optical detector when there is no rotation around the rotation axis 117-3. However, when the gyroscope rotates, an interference signal increases because of a phase difference introduced by the Sagnac effect. Optionally, the processing system 113 includes processing circuit(s) communicatively coupled to memory circuit(s). The processing system 113 is optionally further configured to transmit the rotation rate Ω to a person and/or another system through a rotation rate signal 114.

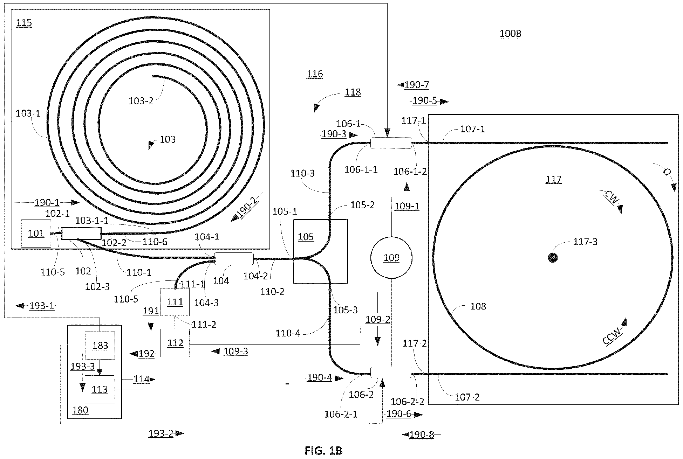

FIG. 1B illustrates a block diagram of one embodiment of a closed loop resonant optical gyroscope including a broadband optical signal source (closed loop ROG-BOSS) 100B. The closed loop ROG-BOSS 100B is similar to the open loop ROG-BOSS 100A except that the circuit 180 configured to determine the rate of rotation of the closed loop ROG-BOSS 100B further includes a feedback circuit 183. The feedback circuit 183 receives the demodulated electrical signal 192 instead of the processing system 113. The feedback circuit 183 is communicatively coupled to each of the first and the second optical phase modulators 106-1, 106-2. The feedback circuit 183 is configured to provide a first feedback signal 193-1 to the first optical phase modulator and a second feedback signal 193-2 to the second optical phase modulator. Optionally, the first and the second feedback signals 193-1, 193-2 are the same. Using a received feedback signal, a phase of at least one of the first and the second optical phase modulators 106-1, 106-2 is adjusted, *e.g.,* offset, to maintain a constant phase delay between the CW and CCW resonant optical signals 190-7, 190-8.

Unlike the open loop ROG-BOSS 100A, the feedback circuit 183, of the closed loop ROG-BOSS 100B, is communicatively coupled to the processing system 113. Unlike the open loop ROG-BOSS 100A, the processing system 113 is configured to receive a feedback output signal 193-3 from the feedback circuit 183. Optionally, the feedback output signal 193-3 is the same as the first feedback signal 193-1 and/or the second feedback signal 193-2. Using the feedback output signal 193-3 which contains the information of a phase shift due to the Sagnac effect, the processing system 113 is configured to determine a rotation rate Ω of the closed loop ROG-BOSS 100B, *e.g.,* the optical resonator 117 therein.

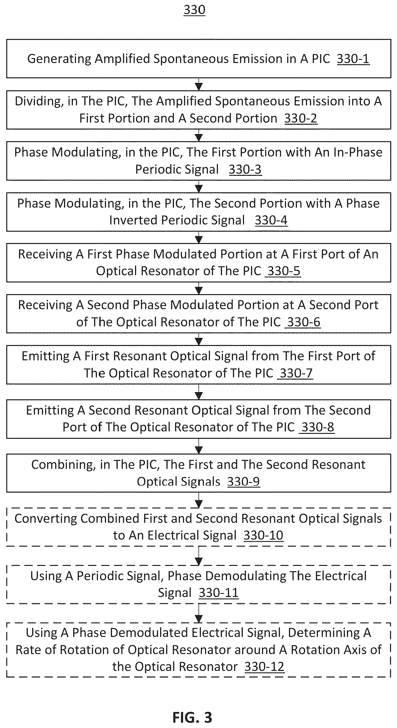

FIG. 3 illustrates a flow diagram of one embodiment of a method 330 of generating optical signals which may be used to determine a rate of rotation in an ROG. Methods described herein may be implemented by one or more of the apparatuses illustrated in FIGS. 1A-2C. To the extent the methods herein are described herein as being implemented with the apparatus illustrated in FIGS. 1A-2C, it is to be understood that other embodiments can be implemented in other ways. Techniques described with respect to the embodiments illustrated by FIGS. 1A-2C may be applicable to the methods described herein.

The blocks of the flow diagrams herein have been arranged in a generally sequential manner for ease of explanation; however, it is to be understood that this arrangement is merely exemplary, and it should be recognized that the processing associated with the methods (and the blocks shown in the Figures) can occur in a different order (for example, where at least some of the processing associated with the blocks is performed in parallel and/or in an event-driven manner).

In block 330-1, an amplified spontaneous emission is generated in a PIC. Optionally, the ASE is generated with the broadband optical signal source 115 described elsewhere herein.

In block 330-2, the amplified spontaneous emission is divided, in the PIC, into a first portion and a second portion. Optionally, such division is performed by the optical divider/combiner 105 described elsewhere herein.

In block 330-3, the first portion is phase modulated, in the PIC, with an in-phase periodic signal. In block 330-4, the second portion is phase modulated, in the PIC, with a phase inverted periodic signal. Optionally, such phase modulation is performed by an optical phase modulator, *e.g.,* including a non-centrosymmetric single crystal material, described elsewhere herein.

In block 330-5, a first phase modulated portion is received, in the PIC, at a first port of an optical resonator of the PIC. The first phase modulated portion is the first portion after being phase modulated in block 330-3. In block 330-6, a second phase modulated portion is received, in the PIC, at a second port of an optical resonator of the PIC. The second phase modulated portion is the second portion after being phase modulated in block 330-4.

In block 330-7, a first resonant optical signal is transmitted, in the PIC, from the first port of the optical resonator of the PIC. The first resonant optical signal circulates around the optical resonator in a first direction, *e.g.,* clockwise or counterclockwise. In block 330-8, a second resonant optical signal is transmitted, in the PIC, from the second port of the optical resonator of the PIC. The second resonant optical signal circulates around the optical resonator in a second direction which is opposite to the first direction. Thus, if the first direction is clockwise, then the second direction is counterclockwise; if the first direction is counterclockwise, then the second direction is clockwise.

In block 330-9, the first resonant optical signal and the second resonant optical signal are combined in the PIC. Optionally, such combination is performed by the divider/combiner 105. The combined first resonant optical signal and the second resonant optical signal are referred to as the combined first and second optical signals. Optionally, the combined first and second resonant optical signals are received by and emitted from the first optical coupler or circulator, *e.g.,* to the optical detector described elsewhere herein.

In optional block 330-10, the combined first resonant optical second resonant optical signals are converted to an electrical signal, *e.g.,* indicative of the optical interference between the first and the second resonant optical signals. Optionally, such conversion is performed in the PIC. Optionally, such conversion is performed by an optical detector described elsewhere herein and optionally in the PIC. Optionally, the electrical signal is converted from an analog signal to a digital signal, *e.g.,* by an analog to digital converter discussed elsewhere herein.

In optional block 330-11, using a reference periodic signal which has an arbitrary phase offset, *e.g.,* a zero or non-zero phase shift, from the in-phase periodic signal, the electrical signal is demodulated. Optionally, such demodulation is performed by the demodulating circuit described elsewhere herein. Optionally, such demodulation is performed in the PIC. The electrical signal which has been demodulated is referred to as a demodulated signal.

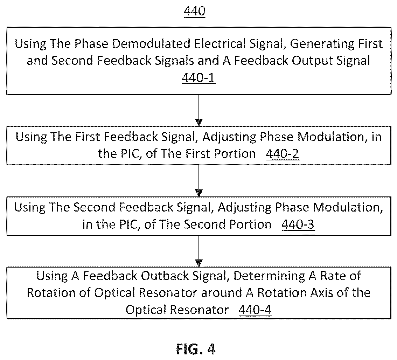

In optional block 330-12, using the demodulated electrical signal which is proportional to a phase shift due to the Sagnac effect, a rate of rotation, around a rotation axis of the optical resonator, is determined. Optionally, such rotation rate determination is performed by the processing system described elsewhere herein. Optionally, such rotation rate determination is performed in the PIC. Optionally, optional block 330-12 further comprises using the demodulated electrical signal to maintain a constant phase delay between the CW and CCW resonant optical signals 190-7, 190-8 by further adjusting the phase modulation at least one of the first portion and the second portion; this is further described in FIG. 4.

FIG. 4 illustrates one embodiment of a method 440 of determining the rate of rotation of the optical resonator around the rotation axis of the optical resonator. In block 440-1, using the demodulated signal, first and second feedback signals and a feedback output signal are generated. Optionally, the first and the second feedback signals and the feedback output signal are generated by the feedback circuit described elsewhere herein. Optionally, such first and such second feedback signals and feedback output signal generation is performed in the PIC.

In block 440-2, using the first feedback signal, the phase modulation of the first portion is adjusted in the PIC. Optionally, the first feedback signal is configured to vary the phase of the first portion.

In block 440-3, using the second feedback signal, the phase modulation of the first portion is adjusted in the PIC. Optionally, the second feedback signal is configured to vary the phase of the second.

In block 440-4, using the feedback output signal, a rate of rotation, of the optical resonator around the rotation axis of the optical resonator, is determined.

While the present teachings have been illustrated with respect to one or more implementations, alterations and/or modifications can be made to the illustrated examples without departing from the scope of the appended claims. In addition, while a particular feature of the present disclosure may have been described with respect to only one of several implementations, such feature may be combined with one or more other features of the other implementations as may be desired and advantageous for any given or particular function. Furthermore, to the extent that the terms "including," "includes," "having," "has," "with," or variants thereof are used in either the detailed description and/or the claims, such terms are intended to be inclusive in a manner similar to the term "comprising." The term "at least one of" is used to mean one or more of the listed items can be selected. As used herein, the term "one or more of" with respect to a listing of items such as, for example, A and B or A and/or B, means A alone, B alone, or A and B. The term "at least one of" is used to mean one or more of the listed items can be selected.

A processing system may include processor circuitry coupled to memory circuitry. The processor circuitry described herein may include one or more microprocessors, microcontrollers, digital signal processing (DSP) elements, application-specific integrated circuits (ASICs), and/or field programmable gate arrays (FPGAs). In this exemplary embodiment, processor circuitry includes or functions with software programs, firmware, or other computer readable instructions for carrying out various process tasks, calculations, and control functions, used in the methods described herein. These instructions are typically tangibly embodied on any storage media (or computer readable medium) used for storage of computer readable instructions or data structures.

The memory circuitry described herein can be implemented with any available storage media (or computer readable medium) that can be accessed by a general purpose or special purpose computer or processor, or any programmable logic device. Suitable computer readable medium may include storage or memory media such as semiconductor, magnetic, and/or optical media. For example, computer readable media may include conventional hard disks, Compact Disk - Read Only Memory (CD-ROM), DVDs, volatile or non-volatile media such as Random Access Memory (RAM) (including, but not limited to, Dynamic Random Access Memory (DRAM)), Read Only Memory (ROM), Electrically Erasable Programmable ROM (EEPROM), and/or flash memory. Combinations of the above are also included within the scope of computer readable media.

Methods (or portions thereof) of the invention can be implemented in computer readable instructions, such as program modules or applications, which may be stored in the computer readable medium that is part of (optionally the memory circuitry) or communicatively coupled to the processing circuitry, and executed by the processing circuitry, optionally the processor circuitry. Generally, program modules or applications include routines, programs, objects, data components, data structures, algorithms, and the like, which perform particular tasks or implement particular abstract data types.

### Example Embodiments

Example 1 includes an apparatus configured to be used for determining a rotation rate, the apparatus comprising: a photonic integrated circuit (PIC) including a substrate, wherein the PIC includes: a broadband optical signal source optical circuit configured to generate an amplified spontaneous emission; an optical divider/combiner; a first optical coupler or circulator optically coupled between the broadband optical signal source optical circuit and the optical divider/combiner; wherein the first optical coupler or is configured to receive the amplified spontaneous emission and to emit the amplified spontaneous emission to the optical divider/combiner; wherein the optical divider/combiner is configured to emit a first portion and a second portion of the amplified spontaneous emission; a first optical phase modulator optically coupled to the optical divider/combiner, and configured to phase modulate the first portion of the amplified spontaneous emission with an in-phase periodic signal; a second optical phase modulator optically coupled to the optical divider/combiner and configured to phase modulate the second portion of the amplified spontaneous emission with a phase inverted periodic signal; and an optical resonator including a rotation axis and optically coupled to the first and the second optical phase modulators; wherein the optical resonator is configured to (a) receive a first phase modulated portion of the amplified spontaneous emission from the first optical phase modulator, (b) receive a second phase modulated portion of the amplified spontaneous emission from the second optical phase modulator, (c) emit a first resonant optical signal, and (d) emit a second resonant optical signal; wherein the optical divider/combiner is further configured to combine the first and the second resonant optical signals.

Example 2 includes the apparatus of Example 1, further comprising: an optical detector optically coupled to the first optical coupler and configured to receive a combined first and second resonant optical signals; a periodic signal generator configured to generate the in-phase periodic signal, the phase inverted periodic signal, and a reference periodic signal; a demodulating circuit electrically coupled to the optical detector and configured to (a) receive the reference periodic signal or the phase inverted periodic signal and (b) emit a demodulated electrical signal; and circuitry configured to, using the demodulated electrical signal, determine a rate of rotation of the optical resonator around the rotation axis.

Example 3 includes the apparatus of Example 2, wherein the circuitry configured to determine the rate of rotation includes a feedback circuit configured to receive the demodulated electrical signal, and to generate a first feedback signal, a second feedback signal, and a feedback output signal; wherein the first optical phase modulator is configured to receive the first feedback signal and, using the first feedback signal, to adjust a phase modulation of the first portion of the amplified spontaneous emission; wherein the second optical phase modulator is configured to receive the second feedback signal and, using the second feedback signal, to adjust a phase modulation of the second portion of the amplified spontaneous emission; and wherein the circuitry configured to determine the rate of rotation further includes processing circuitry configured to receive the feedback output signal and generate the rate of rotation of the optical resonator around the rotation axis.

Example 4 includes the apparatus of any of Examples 2-3, wherein the PIC further includes at least one of the periodic signal generator, the demodulating circuit, and at least part of the circuitry configured to determine the rate of rotation.

Example 5 includes the apparatus of any of Examples 1-4, wherein the broadband optical signal source optical circuit configured to generate the amplified spontaneous emission includes: a laser configured to emit a pump optical signal; a planar optical waveguide configured to receive the pump optical signal and generate the amplified spontaneous emission; and a wavelength division multiplexor configured to optically couple the pump optical signal to the planar optical waveguide configured to generate the amplified spontaneous emission, to receive the amplified spontaneous emission from the planar optical waveguide configured to generate the amplified spontaneous emission, and to optically couple the amplified spontaneous emission to the first optical coupler or circulator; wherein the wavelength division multiplexor is further configured to suppress the amplified spontaneous emission coupled to the laser and to suppress the pump optical signal coupled to the first optical coupler or circulator; wherein the pump optical signal has a narrower line width than a bandwidth of the amplified spontaneous emission.

Example 6 includes the apparatus of Example 5, wherein the planar optical waveguide configured to generate the amplified spontaneous emission includes a cladding surrounding a core, wherein at least a portion of the planar optical waveguide configured to generate the amplified spontaneous emission includes a planar optical waveguide in which at least part of the cladding surrounding the core includes a rare Earth element atoms or ions, wherein an index of refraction of the core is greater than an index of refraction of the cladding, and wherein the cladding is over the substrate.

Example 7 includes the apparatus of any of Examples 1-6, wherein each of the first and the second optical phase modulators include: a waveguide core; a first portion of a cladding around the waveguide core and over the substrate; a non-centrosymmetric single crystal material over the first portion of the cladding; a second portion of the cladding over the non-centrosymmetric single crystal material; and first and second electrically conductive contacts over the second portion of the cladding; wherein the first and the second electrically conductive contacts of the first optical phase modulator are configured to receive the in-phase periodic signal; wherein the first and the second electrically conductive contacts of the second optical phase modulator are configured to receive the phase inverted periodic signal; wherein an index of refraction of the waveguide core is greater than an index of refraction of the cladding.

Example 8 includes the apparatus of any of Examples 1-7, wherein the optical resonator includes a planar optical resonator, a first planar optical waveguide, and a second planar optical waveguide; wherein the first planar optical waveguide is optically coupled to the first optical phase modulator and the planar optical resonator; and the second planar optical waveguide is optically coupled to the second optical phase modulator and the planar optical resonator.

Example 9 includes the apparatus of any of Examples 1-8, further comprising a first planar optical waveguide optically coupling the broadband optical signal source optical circuit and the first optical coupler or circulator, a second planar optical waveguide optically coupling the first optical coupler or circulator and the optical divider/combiner, a third planar optical waveguide optically coupling the optical divider/combiner to the first optical phase modulator, and a fourth planar optical waveguide optically coupling the optical divider/combiner to the second optical phase modulator; wherein each of the first planar optical waveguide, the second planar optical waveguide, the third planar optical waveguide, the fourth planar optical waveguide include a core surrounded by a cladding over the substrate; wherein the broadband optical signal source optical circuit configured to generate the amplified spontaneous emission includes a fifth planar optical waveguide configured to generate the amplified spontaneous emission that includes the cladding surrounding the core, wherein at least a portion of the fifth planar optical waveguide configured to generate the amplified spontaneous emission includes a sixth planar optical waveguide in which at least part of the cladding surrounding the core includes a rare Earth element atoms or ions, and wherein the cladding is over the substrate; wherein the optical resonator includes a planar optical resonator, a seventh planar optical waveguide, and an eighth planar optical waveguide; wherein the seventh planar optical waveguide includes the core surrounded by the cladding, and is optically coupled to the first optical phase modulator and the planar optical resonator; the eighth planar optical waveguide includes the core surrounded by the cladding, and is optically coupled to the second optical phase modulator and the planar optical resonator; wherein the planar optical resonator includes the core surrounded by the cladding; wherein an index of refraction of the core is greater than an index of refraction of the cladding; and wherein a ratio of a thickness of the cladding to a thickness of the core is greater than fifty.

Example 10 includes a method of generating at least one signal configured to be used to determine a rate of rotation, the method comprising: generating, in a photonic integrated circuit (PIC), an amplified spontaneous emission; dividing, in the PIC, the amplified spontaneous emission into a first portion and a second portion; phase modulating, in the PIC, the first portion with an in-phase periodic signal; phase modulating, in the PIC, the second portion with a phase inverted periodic signal; receiving, in the PIC, a first phase modulated portion, of the amplified spontaneous emission, at a first port of an optical resonator; receiving, in the PIC, a second phase modulated portion, of the amplified spontaneous emission, at a second port of the optical resonator; emitting, in the PIC, a first resonant optical signal from the second port of the optical resonator, wherein the first resonant optical signal circulates around the optical resonator in a first direction; emitting, in the PIC, a second resonant optical signal from the first port of the optical resonator, wherein the second resonant optical signal circulates around the optical resonator in a second direction which is opposite to the first direction; combining in the PIC, the first and the second resonant optical signals.

Example 11 includes the method of Example 10, further comprising converting combined first and second resonant optical signals into an electrical signal indicative of an optical power of interference between first and the second resonant optical signals; using the in-phase or the phase inverted periodic signal, demodulating the electrical signal; and using a demodulated electrical signal, determining a rate of rotation of the optical resonator around a rotation axis of the optical resonator.

Example 12 includes the method of Example 11, wherein converting the combined first and second resonant optical signals into the electrical signal includes converting the electrical signal from analog to digital.

Example 13 includes the method of any of Examples 11-12, wherein at least one of converting the combined first and second resonant optical signals, demodulating the electrical signal, and determining the rate of rotation are performed in the PIC.

Example 14 includes the method of any of Examples 11-13, wherein using the demodulated electrical signal, determining the rate of rotation of the optical resonator around its normal rotation axis of the optical resonator comprises: using the demodulated electrical signal, generating a first feedback signal, a second feedback signal, and a feedback output signal; using the first feedback signal, adjusting phase modulation, in the PIC, of the first portion; using the second feedback signal, adjusting phase modulation, in the PIC, of the second portion; and using the feedback output signal, determining the rate of rotation of the optical resonator around the rotation axis of the optical resonator.

Example 15 includes a resonant optical gyroscope, comprising: a photonic integrated circuit (PIC) including a substrate, wherein the PIC includes: a broadband optical signal source optical circuit configured to generate an amplified spontaneous emission; an optical divider/combiner; a first optical coupler or circulator optically coupled between the broadband optical signal source optical circuit and the optical divider/combiner; wherein the first optical coupler or is configured to receive the amplified spontaneous emission and to emit the amplified spontaneous emission to the optical divider/combiner; wherein the optical divider/combiner is configured to emit a first portion and a second portion of the amplified spontaneous emission; a first optical phase modulator optically coupled to the optical divider/combiner, and configured to phase modulate the first portion of the amplified spontaneous emission with an in-phase periodic signal; a second optical phase modulator optically coupled to the optical divider/combiner and configured to phase modulate the second portion of the amplified spontaneous emission with a phase inverted periodic signal; and an optical resonator including a rotation axis and optically coupled to the first and the second optical phase modulators; wherein the optical resonator is configured to (a) receive a first phase modulated portion of the amplified spontaneous emission from the first optical phase modulator, (b) receive a second phase modulated portion of the amplified spontaneous emission from the second optical phase modulator, (c) emit a first resonant optical signal, and (d) emit a second resonant optical signal; wherein the optical divider/combiner is further configured to combine the first and the second resonant optical signals; an optical detector optically coupled to the first optical coupler and configured to receive a combined first and second resonant optical signals; a periodic signal generator configured to generate the in-phase periodic signal, the phase inverted periodic signal, and a reference periodic signal; a demodulating circuit electrically coupled to the optical detector and configured to (a) receive the reference periodic signal or the phase inverted periodic signal and (b) emit a demodulated electrical signal; and circuitry configured to, using the demodulated electrical signal, determine a rate of rotation of the optical resonator around rotation axis; wherein the broadband optical signal source optical circuit configured to generate the amplified spontaneous emission includes: a laser configured to emit a pump optical signal; a planar optical waveguide configured to receive the pump optical signal and generate the amplified spontaneous emission; and a wavelength division multiplexor configured to optically couple the pump optical signal to the planar optical waveguide configured to generate the amplified spontaneous emission, to receive the amplified spontaneous emission from the planar optical waveguide configured to generate the amplified spontaneous emission, and to optically couple the amplified spontaneous emission to the first optical coupler or circulator; wherein the wavelength division multiplexor is further configured to suppress the amplified spontaneous emission coupled to the laser and to suppress the pump optical signal coupled to the first optical coupler or circulator; wherein the pump optical signal has a narrower line width than a bandwidth of the amplified spontaneous emission.

Example 16 includes the resonant optical gyroscope of Example 15, wherein the circuitry configured to determine the rate of rotation includes a feedback circuit configured to receive the demodulated electrical signal, and to generate a first feedback signal, a second feedback signal, and a feedback output signal; wherein the first optical phase modulator is configured to receive the first feedback signal and, using the first feedback signal, to adjust a phase modulation of the first portion of the amplified spontaneous emission; wherein the second optical phase modulator is configured to receive the second feedback signal and, using the second feedback signal, to adjust a phase modulation of the second portion of the amplified spontaneous emission; and wherein the circuitry configured to determine the rate of rotation further includes processing circuitry configured to receive the feedback output signal and generate the rate of rotation of the optical resonator around the rotation axis.

Example 17 includes the resonant optical gyroscope of any of Examples 15-16, wherein the PIC further includes at least one of the periodic signal generator, the demodulating circuit, and at least part of the circuitry configured to determine the rate of rotation.

Example 18 includes the resonant optical gyroscope of any of Examples 15-17, wherein each of the first and the second optical phase modulators include: a waveguide core; a first portion of a cladding around the waveguide core and over the substrate; a non-centrosymmetric single crystal material over the first portion of the cladding; a second portion of the cladding over the non-centrosymmetric single crystal material; and first and second electrically conductive contacts over the second portion of the cladding; wherein the first and the second electrically conductive contacts of the first optical phase modulator are configured to receive the in-phase periodic signal; wherein the first and the second electrically conductive contacts of the second optical phase modulator are configured to receive the phase inverted periodic signal; wherein an index of refraction of the waveguide core is greater than an index of refraction of the cladding.

Example 19 includes the resonant optical gyroscope of any of Examples 15-18, wherein the optical resonator includes a planar optical resonator, a first planar optical waveguide, and a second planar optical waveguide; wherein the first planar optical waveguide is optically coupled to the first optical phase modulator and the planar optical resonator; and the second planar optical waveguide is optically coupled to the second optical phase modulator and the planar optical resonator.

Example 20 includes the resonant optical gyroscope of any of Examples 15-19, further comprising a first planar optical waveguide optically coupling the broadband optical signal source optical circuit and the first optical coupler or circulator, a second planar optical waveguide optically coupling the first optical coupler or circulator and the optical divider/combiner, a third planar optical waveguide optically coupling the optical divider/combiner to the first optical phase modulator, and a fourth planar optical waveguide optically coupling the optical divider/combiner to the second optical phase modulator; wherein each of the first planar optical waveguide, the second planar optical waveguide, the third planar optical waveguide, the fourth planar optical waveguide include a core surrounded by a cladding over the substrate; wherein the broadband optical signal source optical circuit configured to generate the amplified spontaneous emission includes a fifth planar optical waveguide configured to generate the amplified spontaneous emission that includes the cladding surrounding the core, wherein at least a portion of the fifth planar optical waveguide configured to generate the amplified spontaneous emission includes a sixth planar optical waveguide in which at least part of the cladding surrounding the core includes a rare Earth element atoms or ions, and wherein the cladding is over the substrate; wherein the optical resonator includes a planar optical resonator, a seventh planar optical waveguide, and an eighth planar optical waveguide; wherein the seventh planar optical waveguide includes the core surrounded by the cladding, and is optically coupled to the first optical phase modulator and the planar optical resonator; the eighth planar optical waveguide includes the core surrounded by the cladding, and is optically coupled to the second optical phase modulator and the planar optical resonator; wherein the planar optical resonator includes the core surrounded by the cladding; wherein an index of refraction of the core is greater than an index of refraction of the cladding; and wherein a ratio of a thickness of the cladding to a thickness of the core is greater than fifty.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. An apparatus configured to be used for determining a rotation rate, the apparatus comprising:
a photonic integrated circuit (PIC) including a substrate, wherein the PIC includes:
a broadband optical signal source optical circuit configured to generate an amplified spontaneous emission;
an optical divider/combiner;
a first optical coupler or circulator optically coupled between the broadband optical signal source optical circuit and the optical divider/combiner;
wherein the first optical coupler or is configured to receive the amplified spontaneous emission and to emit the amplified spontaneous emission to the optical divider/combiner;
wherein the optical divider/combiner is configured to emit a first portion and a second portion of the amplified spontaneous emission;
a first optical phase modulator optically coupled to the optical divider/combiner, and configured to phase modulate the first portion of the amplified spontaneous emission with an in-phase periodic signal;
a second optical phase modulator optically coupled to the optical divider/combiner and configured to phase modulate the second portion of the amplified spontaneous emission with a phase inverted periodic signal; and
an optical resonator including a rotation axis and optically coupled to the first and the second optical phase modulators;
wherein the optical resonator is configured to (a) receive a first phase modulated portion of the amplified spontaneous emission from the first optical phase modulator, (b) receive a second phase modulated portion of the amplified spontaneous emission from the second optical phase modulator, (c) emit a first resonant optical signal, and (d) emit a second resonant optical signal;
wherein the optical divider/combiner is further configured to combine the first and the second resonant optical signals;
optionally, wherein the planar optical waveguide configured to generate the amplified spontaneous emission includes a cladding surrounding a core, wherein at least a portion of the planar optical waveguide configured to generate the amplified spontaneous emission includes a planar optical waveguide in which at least part of the cladding surrounding the core includes a rare Earth element atoms or ions, wherein an index of refraction of the core is greater than an index of refraction of the cladding, and wherein the cladding is over the substrate;
optionally, wherein each of the first and the second optical phase modulators include:
a waveguide core;
a first portion of a cladding around the waveguide core and over the substrate;
a non-centrosymmetric single crystal material over the first portion of the cladding;
a second portion of the cladding over the non-centrosymmetric single crystal material; and
first and second electrically conductive contacts over the second portion of the cladding;
wherein the first and the second electrically conductive contacts of the first optical phase modulator are configured to receive the in-phase periodic signal;
wherein the first and the second electrically conductive contacts of the second optical phase modulator are configured to receive the phase inverted periodic signal;
wherein an index of refraction of the waveguide core is greater than an index of refraction of the cladding.

2. The apparatus of claim 1, further comprising:
an optical detector optically coupled to the first optical coupler and configured to receive a combined first and second resonant optical signals;
a periodic signal generator configured to generate the in-phase periodic signal, the phase inverted periodic signal, and a reference periodic signal;
a demodulating circuit electrically coupled to the optical detector and configured to (a) receive the reference periodic signal or the phase inverted periodic signal and (b) emit a demodulated electrical signal; and
circuitry configured to, using the demodulated electrical signal, determine a rate of rotation of the optical resonator around the rotation axis.

3. The apparatus of claim 2, wherein the circuitry configured to determine the rate of rotation includes a feedback circuit configured to receive the demodulated electrical signal, and to generate a first feedback signal, a second feedback signal, and a feedback output signal;
wherein the first optical phase modulator is configured to receive the first feedback signal and, using the first feedback signal, to adjust a phase modulation of the first portion of the amplified spontaneous emission;
wherein the second optical phase modulator is configured to receive the second feedback signal and, using the second feedback signal, to adjust a phase modulation of the second portion of the amplified spontaneous emission; and
wherein the circuitry configured to determine the rate of rotation further includes processing circuitry configured to receive the feedback output signal and generate the rate of rotation of the optical resonator around the rotation axis.

4. The apparatus of claim 2, wherein the PIC further includes at least one of the periodic signal generator, the demodulating circuit, and at least part of the circuitry configured to determine the rate of rotation.

5. The apparatus of claim 1, wherein the broadband optical signal source optical circuit configured to generate the amplified spontaneous emission includes:
a laser configured to emit a pump optical signal;
a planar optical waveguide configured to receive the pump optical signal and generate the amplified spontaneous emission; and
a wavelength division multiplexor configured to optically couple the pump optical signal to the planar optical waveguide configured to generate the amplified spontaneous emission, to receive the amplified spontaneous emission from the planar optical waveguide configured to generate the amplified spontaneous emission, and to optically couple the amplified spontaneous emission to the first optical coupler or circulator;
wherein the wavelength division multiplexor is further configured to suppress the amplified spontaneous emission coupled to the laser and to suppress the pump optical signal coupled to the first optical coupler or circulator;
wherein the pump optical signal has a narrower line width than a bandwidth of the amplified spontaneous emission.

6. The apparatus of claim 1, wherein the optical resonator includes a planar optical resonator, a first planar optical waveguide, and a second planar optical waveguide;
wherein the first planar optical waveguide is optically coupled to the first optical phase modulator and the planar optical resonator; and
the second planar optical waveguide is optically coupled to the second optical phase modulator and the planar optical resonator.

7. A method of generating at least one signal configured to be used to determine a rate of rotation, the method comprising:
generating, in a photonic integrated circuit (PIC), an amplified spontaneous emission;
dividing, in the PIC, the amplified spontaneous emission into a first portion and a second portion;
phase modulating, in the PIC, the first portion with an in-phase periodic signal;
phase modulating, in the PIC, the second portion with a phase inverted periodic signal;
receiving, in the PIC, a first phase modulated portion, of the amplified spontaneous emission, at a first port of an optical resonator;
receiving, in the PIC, a second phase modulated portion, of the amplified spontaneous emission, at a second port of the optical resonator;
emitting, in the PIC, a first resonant optical signal from the second port of the optical resonator, wherein the first resonant optical signal circulates around the optical resonator in a first direction;
emitting, in the PIC, a second resonant optical signal from the first port of the optical resonator, wherein the second resonant optical signal circulates around the optical resonator in a second direction which is opposite to the first direction;
combining in the PIC, the first and the second resonant optical signals.

8. The method of claim 7, further comprising converting combined first and second resonant optical signals into an electrical signal indicative of an optical power of interference between first and the second resonant optical signals;
using the in-phase or the phase inverted periodic signal, demodulating the electrical signal; and
using a demodulated electrical signal, determining a rate of rotation of the optical resonator around a rotation axis of the optical resonator.

9. The method of claim 8, wherein at least one of converting the combined first and second resonant optical signals, demodulating the electrical signal, and determining the rate of rotation are performed in the PIC.

10. The method of claim 8, wherein using the demodulated electrical signal, determining the rate of rotation of the optical resonator around its normal rotation axis of the optical resonator comprises:
using the demodulated electrical signal, generating a first feedback signal, a second feedback signal, and a feedback output signal;
using the first feedback signal, adjusting phase modulation, in the PIC, of the first portion;
using the second feedback signal, adjusting phase modulation, in the PIC, of the second portion; and
using the feedback output signal, determining the rate of rotation of the optical resonator around the rotation axis of the optical resonator.
